# EUROPEAN PATENT APPLICATION

(11) **EP 1 696 212 A1**
(43) Date of publication of application: **30.08.2006**
(21) Application number: 04799856.2
(22) Date of filing: 19.11.2004
(51) Int. Cl.: G01D 5/12, B29C 45/14, H05K 5/00

(54) **STRUCTURE FOR HOLDING ELECTRONIC COMPONENT**

(30) Priority: 28.11.2003 JP 2003398756
(71) Applicant: AISIN SEIKI KABUSHIKI KAISHA, Kariya-shi, Aichi 448-8650 (JP)
(72) Inventor: OKUYA, Hisayoshi, Aisin Seiki Kabushiki Kaisha, Kariya-shi, Aichi 448-8650 (JP); YASUDA, Keiji, Aisin Seiki Kabushiki Kaisha, Kariya-shi, Aichi 448-8650 (JP)
(74) Representative: TBK-Patent
(86) International application number: PCT/JP2004/017654
(87) International publication number: WO 2005/052517

(57) **Abstract**

A holding structure for an electronic part includes a first resin mold which has a positioning shape portion for the electronic part, and a second resin mold which is insert-molded to cover the first resin mold and the electronic part positioned with the first resin mold. Through holes for passing an insert resin material adapted to form the second resin mold is formed in the positioning shape portion of the first resin mold. The holding structure for the electronic part improves the positioning accuracy of the electronic part by virtue of the positioning shape portion for accommodating the electronic part, and prevents occurrence of deformations and cracks in the positioning shape portion due to insert-molding.

## Description

### TECHNICAL FIELD

The present invention relates to a holding structure for an electronic part and holding method thereof.

### BACKGROUND ART

The holding structure disclosed in Patent document 1 (Publication of Japanese unexamined patent application No. 2003-172634), ex. has been known as one of conventional holding structures for electronic parts. Namely, the holding structure disclosed in this publication includes a first resin mold (24, mold to which electronic parts and terminals are secured) which is insert-molded relative to a terminal (23) and is provided with positioning shape portions (24a, 24b) for electronic parts (22, 25) electrically connected to the terminal (23), and a second resin mold (21, connecter housing) which is insert-molded relative to the terminal (23) and the first resin mold (24) so as to cover the first resin mold (24) and the electronic parts (22, 25) positioned with the first resin mold (24) and electrically connected to the terminal (23).
(Patent document 1) Publication of Japanese unexamined patent application No. 2003-172634

### DISCLOSURE OF THE INVENTION

However, with the above-described prior art, when an insert resin material composing the second resin mold (21) is insert-molded relative to the first resin mold (24), the amount of a clearance between the positioning shape portion (24b) and the electronic part (25) is great. Therefore, when the insert resin material enters the clearance, voids (bubbles) may mix in the resin material. In addition, an insert pressure of the insert resin material may cause the problem that deformations and cracks occur in the positioning shape portions to cut an electrical conduction with the terminal, and the first resin mold may be exposed without completely covering the second resin mold.

The present invention has a technical theme of providing a holding structure for an electronic part, which has a novel arrangement capable of improving the positioning accuracy of an electronic part with a positioning shape portion, preventing occurrence of deformations and cracks (breaks) in the positioning shape portion for an electronic part when the second resin mold is insert-molded, and consequently solving conventionally encountered problems.

With a first technical means adopted to solve the above-described problems, in a holding structure for an electronic part, including a first resin mold which has a positioning shape portion for an electronic part, and a second resin mold which is insert-molded so as to cover the first resin mold and the electronic part positioned with the first resin mold, the positioning shape portion of the first resin mold has a through hole for allowing an insert resin material to pass therein to form the second resin mold.

With the present invention, there can be achieved peculiar effects that occurrence of deformations and cracks in the positioning shape portion for the electronic part can be prevented upon insert-molding of the material adapted to cover the positioning shape portion for the electronic part, that the resin material can be smoothly led to the positioning shape portion, and that the positioning accuracy of the electronic part can be improved.

### BRIEF DESCRIPTION OF THE DRAWINGS

FIG. 1 is a plan view showing a rotation angle detecting device as one embodiment of the present invention.

FIG. 2 is a cross-sectional view taken along line B-B of the rotation angle detecting device of FIG. 1.

FIG. 3 is a plan view showing a mold provided in a rotation angle detecting device as one embodiment of the present invention.

FIG. 4 is a cross-sectional view taken along line B2-B2 of the rotation angle detecting device of FIG. 3.

FIG. 5 is a plan view showing a mold provided in a rotation angle detecting device as another embodiment of the present invention.

### BEST MODE FOR CARRYING OUT THE INVENTION

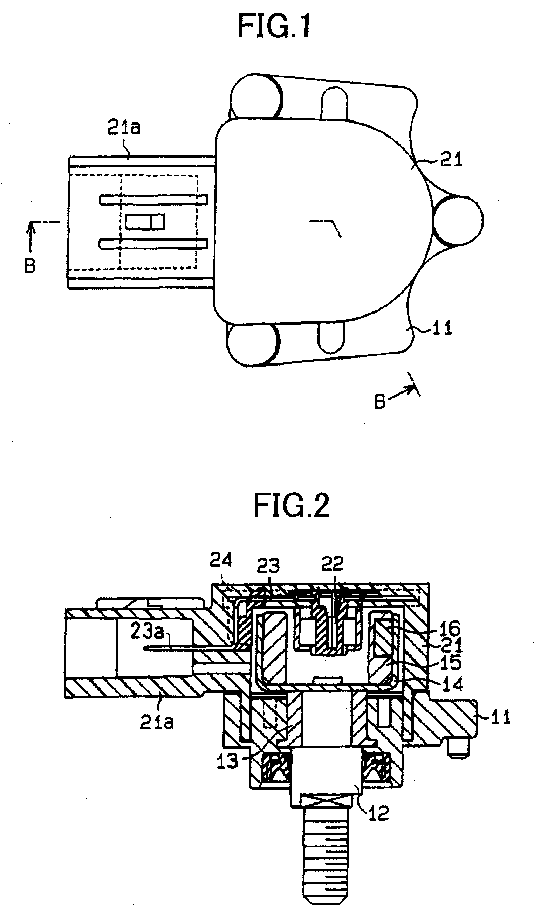

Hereinafter, One embodiment of the present invention will be explained with reference to FIGS. 1 through 4. FIG. 1 through FIG. 4 show one embodiment of the present invention.

FIG. 1 and FIG. 2 show a rotation angle detecting device to which the present embodiment is applied, FIG. 1 shows a plan view and FIG. 2 shows a cross-sectional view taken along line B-B of FIG. 1. As shown in FIG. 1 through FIG. 4, a rotation shaft 12 which is secured to a rotatable subject to be detected (not shown) is axially supported with a housing 11 to form a main part of the rotation angle detecting device via a bearing 13. And a yoke 14 with a generally bottomed cylindrical configuration, which is composed of a magnetic material such as iron, is secured to a top end (an upper end in FIG. 2) of the rotation shaft 12 by caulking or other methods coaxially with the rotation shaft. A resin body 15 with a generally cylindrical configuration is secured to an inner periphery of the yoke 14 coaxially with the rotation shaft 12. A plurality of permanent magnets 16 are embedded in and secured to the resin body 15. The rotation shaft 12, the yoke 14, the resin body 15 and the permanent magnets 16 compose a rotor, and are arranged such that the direction of a generated magnetic flux can be varied with the integral rotation with the subject to be detected in accordance with the variation of the angle of the rotatable subject.

A connector housing 21 as a second resin mold is fixedly mounted on an upper end of the housing 11. To secure the connector housing 21 to the housing 11, an adhesive agent and an ultrasonic vibration welding can be used, and a welding method using welding with laser is also applicable.

The connector housing 21 composing the second resin mold is provided by insert-molding a Hall IC 22 as a magnetic detecting element which is an electron part embedded and held inside the connector housing 21 integrally with a first resin mold 24 composing a later describing first resin mold on which a terminal 23, etc. electrically connected to the Hall IC 22 are placed.

In a later describing embodiment, the Hall IC 22 as the electronic part is arranged coaxially with the rotation shaft 12 (rotor) when the connector housing 21 is fixedly mounted on the housing 11. The permanent magnets 16 are freely rotatable round the Hall IC 22. When the rotation shaft 12 (permanent magnets 16) rotates according to the angle variation of the subject to be detected, the direction of the magnetic flux generated in the vicinity of the Hall IC 22 varies. The Hall IC 22 operates to detect the rotation angle of the subject to be detected by outputting a voltage depending on this magnetic flux.

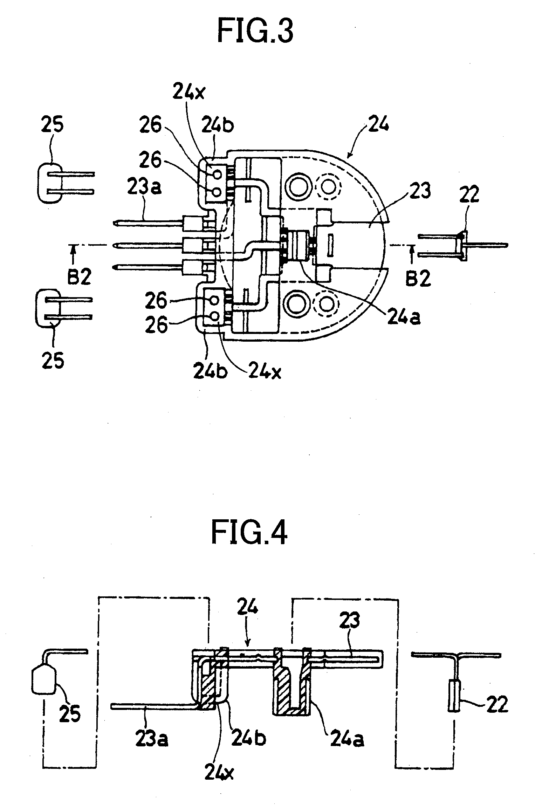

Next, the details of the holding structure for the Hall IC 22 with the above-described connector housing 21 will be explained with reference to FIG. 3 and FIG. 4. FIG. 3 and FIG. 4 show a first resin mold 24 which is insert-molded relative to the above-described terminal 23. FIG. 3 is a plan view, and FIG. 4 is a cross-sectional view taken along line B2-B2 of FIG. 3. As shown in FIG. 3 and FIG. 4, this first resin mold 24 is molded such that tip ends 23a, etc. of the above-described terminal 23 are exposed, and a cup-shaped part 24a functioning as the positioning shape portion is formed in a predetermined position thereof.

The cup-shaped part 24a is arranged relative to the terminal 23. The cup-shaped part 24a has a space capable of accommodating the above-described Hall IC 22. The Hall IC 22 is arranged so as to be inserted in the space of the cup-shaped part 24a, thus the Hall IC 22 is positioned relative to the first resin mold 24. With this arrangement, the Hall IC 22 is positioned relative to the terminal 23 via the first resin mold 24.

Bending terminals of the Hall IC 22 are electrically connected to the terminal 23 with the Hall IC 22 positioned relative to the first resin mold 24. Each terminal of the Hall IC 22 and the terminal 23 are joined to each other by projection welding, for example.

As shown in FIG. 3 and FIG. 4, cup-shaped parts 24b for mounting electron parts 25 are also formed in this first resin mold 24. Also, bending terminals of the electron parts 25 are electrically connected to the terminal 23 with the electron parts 25 mounted in the cup-shaped parts 24b which function as the positioning shape portions. The terminals of the electron parts 25 and the terminal 23 are joined to each other by projection welding, for example. As shown in FIG. 3 and FIG. 4, the cup-shaped part 24a accommodates the Hall IC 22, whereas the cup-shaped parts 24b accommodate the electron parts 25.

On the other hand, a comparatively great gap (clearance) is respectively provided between inner walls of another cup-shaped parts 24b and the electron parts 25. When the connector housing 21 is insert-molded, resin enters this clearance. In the embodiment shown in FIG. 3, two through holes 26 are respectively formed in bottom walls 24x partly composing the inner walls of the cup-shaped parts 24b. Namely, two through holes 26 are formed in one cup-shaped part 24b. Also, when the insert resin material adapted to compose the connector housing 21 is insert-molded, the insert resin material passes between the inner walls of the cup-shaped parts 24b and the electron parts 25 and passes the through holes 26, whereby the whole first resin mold 24 is molded integrally. The through holes 26 have a guiding function of leading the insert resin material into the positioning shape portions 24b.

In the preceding embodiment, the insert resin material adapted to compose the connector housing 21 is insert-molded with the Hall IC 22 and the electron parts 25 assembled in the first resin mold 24 so as to integrally cover the first resin mold 24 and the Hall IC 22 relative to the terminal 23; consequently, the holding structure of the present embodiment is completed. This connector housing 21 is formed to have a connector mounting part 21a for exposing and surrounding tip ends 23a of the terminal 23.

The through holes 26, provided in the cup-shaped parts 24b which works as the positioning shape portions of the first resin mold 24, have the following function. Namely, when the insert resin material adapted to compose the connector housing 21 is insert-molded, the through holes 26 allow the insert resin material which has entered the cup-shaped parts 24b to form the second resin mold to pass to the rear surface of the first resin mold 24. Thereby, the through holes 26 promote the flowing of the insert resin material. Namely, upon insert-molding of covering the first resin mold 24 with the insert resin material, the through holes 26 promote the flowing (fluidity) of the insert resin material to restrain the generation of voids and gas domes in the resin within the cup-shaped parts 24b, thereby preventing the first resin mold 24 from deforming and breaking during the insert-molding.

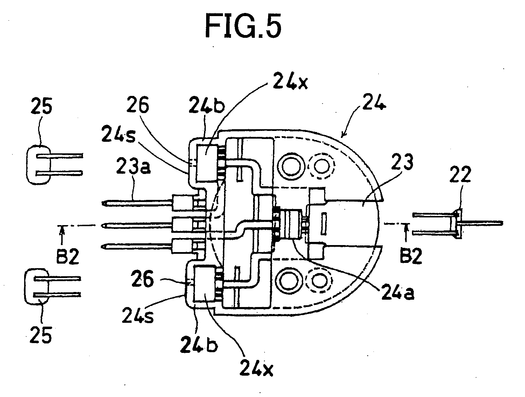

In the present embodiment, the through holes 26 are provided in bottom surfaces 24x of the cup-shaped parts 24b, but the through holes 26 may be formed in wall surfaces defining the cup-shaped parts 24b. For example, as shown in another embodiment of FIG. 5, they can be provided not only in the bottom surfaces 24x but also in any position such as side surfaces 24s, etc. of the cup-shaped parts 24b.

And in the present embodiment, two through holes 26 are provided in one cup-shaped part 24b, but the number of the through holes 26 is not limited specifically if at least one through hole 26 is provided in each cup-shaped part 24b. Also, the through holes 26 are provided in the cup-shaped parts 24b, but the through holes 26 may be provided in the cup-shaped part 24a adapted for accommodating the Hall IC 22 in accordance with the amount of the clearance therebetween.

The Hall IC 22 is positioned and held relative to the terminal 23 with the connector housing 21 and the first resin mold 24. The Hall IC 22 is arranged coaxially with the rotation shaft 12 (rotor) when the connector housing 21 is mounted on the housing 11, and functions as a rotation angle detecting device.

In the preceding embodiment, the Hall IC 22 was adopted as the magnetic detecting element, but a magneto-resistor, for example, may be adopted. And, the present invention has been applied to the holding structure for the Hall IC 22 as one of the electronic parts, but may be applied to the holding structures for other electronic parts. One embodiment of the present invention has been applied to the rotation angle detecting device, but may be applied to other devices.

### INDUSTRIALAPPLICABILITY

As described above, the holding structure for electronic parts in accordance with the present invention can be used to hold electronic parts.

## Claims

1. A holding structure for an electronic part, including a first resin mold which has a positioning shape portion for the electronic part, and a second resin mold which is insert-molded so as to cover the first resin mold and the electronic part positioned with the first resin mold, **characterized in that** said positioning shape portion of said first resin mold is provided with a through hole for allowing an insert resin material to pass therein to form the second resin mold.

2. A holding structure for an electronic part, as claimed in claim 1, wherein said positioning shape portion has a cup-shaped configuration in which the electronic part is adapted to be inserted.

3. A holding structure for an electronic part, as claimed in claim 2, wherein said through hole is provided in a bottom wall of said positioning shape portion.

4. A holding structure for an electronic part, as claimed in claim 3, wherein said through hole provided in said bottom wall of said positioning shape portion includes two through holes.

5. A holding structure for an electronic part, as claimed in claim 2, wherein said through hole is provided in a side wall of said positioning shape portion.

6. A holding structure for an electronic part, as claimed in claim 3, wherein said through hole provided in said side wall of said positioning shape portion includes two through holes.

7. A holding structure for an electronic part, as claimed in claim 1, wherein a gap is provided between an inner wall surface of said positioning shape portion with a cup-shaped configuration, in which the electronic part is adapted to be inserted, and the electronic part.

8. A holding structure for an electronic part, as claimed in claim 1, wherein said through hole guides said insert resin material to form said second resin mold into said positioning shape portion.
